# EUROPÄISCHE PATENTSCHRIFT

(11) **EP 0 539 916 B1**
(45) Veröffentlichungstag und Bekanntmachung des Hinweises auf die Patenterteilung: **09.04.1997**
(21) Anmeldenummer: 92118334.9
(22) Anmeldetag: 27.10.1992
(51) Int. Cl.: C08G 59/42, C09D 163/00, C09D 167/00

(54) **Beschichtungsmassen auf Basis nachwachsender Rohstoffe**
Coating compositions based on regenerable raw material
Compositions de revêtement à partir de matières premières régénérentes

(30) Priorität: 29.10.1991 DE 4135664
(43) Veröffentlichungstag der Anmeldung: 05.05.1993
(73) Patentinhaber: DR. TH. BÖHME KG CHEM. FABRIK GMBH & CO., D-82538 Geretsried (DE)
(72) Erfinder: Balbach, Günter, Dr., W-8190 Wolfratshausen (DE); Jung, Karl-Heinz, Dr., W-8021 Icking (DE); Döcker, Horst, W-8192 Geretsried (DE)
(74) Vertreter: Fehners, Klaus Friedrich, Dipl.-Ing., Dipl.-Wirtsch.-Ing.

(56) Entgegenhaltungen:
- EP-A- 174 042
- DE-A- 1 494 405
- FR-A- 2 457 884

## Beschreibung

Die Erfindung betrifft Beschichtungsmassen auf Basis nachwachsender Rohstoffe.

Im Rahmen der Entwicklung dieser Erfindung wurden nur solche Verfahren untersucht, bei denen weder die Verwendung organischer Lösungsmittel, noch die Verwendung von Wasser als Verarbeitungshilfsmittel erforderlich ist. Organische Lösungsmittel können aus Gründen des Umweltschutzes nicht mehr problemlos in die Atmosphäre abgegeben werden. Sie müssen in aufwendigen Verfahren aus der Abluft entfernt und wieder aufbereitet werden. Aufgrund der hohen Verdampfungswärme des Wassers ist für seine Verdampfung bei Beschichtungsprozessen ein hoher Energieaufwand zu treiben.

Für Beschichtungsprozesse eignen sich besonders solche Massen, welche nur die Bestandteile der späteren Beschichtung enthaften, bei Raumtemperatur dickflüssig oder pastös sind und durch eine kurze Wärmebehandlung so verfestigt werden können, daß sie nach dem Abkühlen keine klebrige Oberfläche mehr besitzen und mechanisch ausreichend stabil für die weitere Handhabung sind.

Die bekanntesten Produkte aus Beschichtungsmassen auf Basis nachwachsender Rohstoffe sind die als Linoleum bezeichneten Fußbodenbeläge. Diese Beschichtungen können nur mit einem großen technischen Aufwand und mit verfahrensbedingt begrenzten Kapazitäten hergestellt werden. Die Beschreibung der Herstellung bei Ullmann, Enzyklopädie der technischen Chemie, Band 12 (1976), Seite 24 ff spricht für sich. Eine kontinuierliche Beschichtung von Rolle auf Rolle ist aufgrund der langen "Reifezeit" der fertigen Beschichtung nicht möglich.

Für heute bestehende Beschichtungsanlagen zur kontinuierlichen Herstellung von bahnenförmigen Beschichtungen müssen folgende Forderungen erfüllt werden:

Vor der Beschichtung muß die Masse bei Raumtemperatur eine hochviskose Flüssigkeit oder eine streichfähige Paste sein. Diese Konsistenz soll sich bei Raumtemperatur in den ersten Stunden nach dem Mischen nicht oder nur wenig ändern. Die Verfestigung soll bei Temperaturen nicht über 200°C in maximal 5 Minuten erfolgen, um eine kontinuierliche Beschichtung mit Durchlaufheizkanal zu ermöglichen. Die Beschichtung soll nach einer Passage über Kühlwalzen rollbar sein und darf deshalb keine Oberflächenklebrigkeit mehr aufweisen.

Die Beschichtung soll elastisch, abriebsfest und hydrolysebeständig sein.

Massen, die zur Verarbeitung flüssig, danach fest sind, bestehen meist aus mindestens 2 Komponenten, die bei der Verarbeitung chemisch miteinander reagieren.

Die DE-OS 22 41 535 beschreibt Massen, die einige dieser Forderungen erfüllen, jedoch nicht alle. Nach dieser Druckschrift werden natürliche Öle, welche ungesättigte Fettsäuren enthalten, an den vorhandenen Doppelbindungen epoxidiert und die entstehenden flüssigen Folgeprodukte durch vernetzende Substanzen in elastische Schichten überführt. Als Vernetzer dienen Verbindungen, die einen oder mehrere aliphatische Reste der Kettenlänge C₈ bis C₂₂, sowie wenigstens zwei freie Carboxylgruppen im Molekül enthalten.

Soweit es sich bei diesen Vernetzern um Substanzen mit normalen aliphatischen Carbonsäuregruppen handelt, z.B. die Zitronensäureteilester, können sie die Forderung nicht erfüllen, daß sie nach den genannten kurzen Aufheizzeiten auf kontinuierlich arbeitenden Beschichtungsanlagen schon klebfrei sind. Nach Beispiel 1 der DE-OS 22 41 535 erhält man mit Monoethylhexyl - Zitronensäureester zwar in 2,5 Min bei 150°C eine Aushärtung der Beschichtung, die Oberfläche ist aber für eine kontinuierliche Arbeitsweise zu klebrig.

Zitronensäureester, also Monoalkylester der Zitronensäure oder Polyzitronensäure mit höheren Alkoholen der Kettenlänge C₈ bis C₂₂, sind aufgrund des Herstellungsverfahrens sehr teure Substanzen.

In dieser Druckschrift wird als weitere Substanzklasse die der Umsetzungsprodukte von Anhydriden von ungesättigten oder aromatischen Polycarbonsäuren mit Di- und Polyhydroxyverbindungen der Kettenlänge C₈ bis C₂₂ genannt. Diese Verbindungen sind bei Raumtemperatur fest.

Somit müssen sie nach der Herstellung einer teuren Aufbereitung unterzogen werden (Granulieren, Mahlen oder Sprühen aus der Schmelze und Sieben). Die Verarbeitung muß bei höheren Temperaturen aus der Schmelze erfolgen oder der Vernetzer muß im Heizprozeß aufgeschmolzen werden, was diesen natürlich verlängert. Neben dem zusätzlichen Energieverbrauch erfordert das Beschichten mit Massen, deren Verarbeitungstemperatur deutlich über der Raumtemperatur liegt, aufwendige Beschichtungsvorrichtungen. Ein wirtschaftliches Hindernis für den Einsatz der zuletztgenannten Vernetzer ist die Tatsache, daß keine Verbindung, welche die beschriebene chemische Struktur aufweist, im Altstoffverzeichnis zum Chemikaliengesetz der eruopäischen Gemeinschaft genannt ist. Dies bedeutet, daß solche Vernetzer in einer industriellen Fertigung nur nach einem langwierigen und teuren Anmeldungsverfahren eingesetzt werden können.

Die EP 0 174 042 beschreibt 2-Komponentensysteme, welche nach der Beschreibung der Verarbeitung für die üblichen Anlage zur Linoleumherstellung mit allen ihren Nachteilen (lange Heizzeiten und damit beschränkte Kapazitäten) geeignet sind. Sie eignen sich nicht für gängige Streichmaschinen. Die Komponenten A und B werden nämlich bei 60 - 150°C gemischt und verarbeitet und das Erhitzen nach der Beschichtung dauert einige Stunden oder Tage.

Als Komponente A werden "Reaktionsprodukte eines epoxidierten Fettsäureesters eines mehrwertigen Alkohols und einer einwertigen Carbonsäure" verwendet, die Komponente B besteht aus einem "carbonsäuremodifizierten Fettsäureester eines mehrwertigen Alkohols", wobei die Komponente A in einem zeit- und energie-aufwendigen Veresterungsverfahren hergestellt werden muß.

Die carbonsäuremodifizierten Fettsäureester sind reaktionsträge Verbindungen, insbesondere soweit sie normale aliphatische Carboxylgruppen enthalten. Daraus resultieren die langen Reaktionszeiten.

Die in der EP 0 174 042 beschriebenen carboxylgruppenhaltigen Ester, Reaktionsprodukte eines hydroxyfunktionellen Fettsäureesters eines mehrwertigen Alkohols und einer mehrwertigen Carbonsäure oder eines Anhydrids hiervon, sind reaktionsfähiger. Trotzdem zeigen sie aufgrund des hohen Molekulargewichts eine überraschend langsame Reaktion mit den Epoxidgruppen der Komponente A. Dazu trägt noch bei, daß die Carboxylgruppen nicht am Kettenende sitzen, sondern an einer innermolekularen Verzweigung. Auch für diese Verbindungsklasse gilt, daß keine Reaktionsprodukte hydroxyl-funktioneller Fettsäureester eines mehrwertigen Alkohols und einer ungesättigten mehrwertigen Carbonsäure oder eine Anhydrids im Altstoffverzeichnis der europäischen Gemeinschaft gefunden werden konnten. Die ebenfalls als Komponente B beschriebenen Diels-Alder-Addukte ungesättigter Dicarbonsäuren mit den ungesättigten Fettsäuren in natürlichen Ölen besitzen in α,β-Stellung zu den freien Carboxylgruppen keine Doppelbindung mehr und sind schon aus diesem Grund zu reaktionsträge für eine kontinuierliche Beschichtung.

Im Rahmen der Entwicklung der vorliegenden Erfindung wurde nun überraschenderweise festgestellt, daß Massen formuliert werden können, welche alle eingangs geforderten Eigenschaften für Beschichtungsmassen besitzen und aus einfach zugänglichen, preiswerten Rohstoffen in einfachen chemischen Reaktionen herstellbar sind.

Die Erfindung verwendet ein stöchiometrisches oder nur geringfügig von den stöchiometrischen Verhältnissen abweichendes Gemisch von epoxidierten natürlichen Ölen (z.B. epoxidiertes Sojaöl oder epoxidiertes Leinöl) als eine Komponente der Beschichtungsmasse und Umsetzungsprodukte von Anhydriden von α,β-ungesättigten Carbonsäuren mit Polyetherglykolen als eine zweite. Mit diesen Massen konnten alle Forderungen mit Ausnahme der Hydrolysebeständigkeit erfüllt werden. Durch Zusatz von geeigneten Hydrophobiermitteln als dritter Komponente, z.B. hydrophoben Wachsen oder Metallstearaten, konnte eine ausreichende Hydrolysefestigkeit erreicht werden.

Demgemäß umfassen die erfindungsgemäßen Beschichtungsmassen eine Kombination von drei Komponenten a) bis c), welche wie folgt zu definieren sind:
a) Epoxidierungsprodukte von Estern ungesättigter Fettsäuren der Kettenlänge C₈ bis C₂₂ mit 2 - C-Atome enthaltenden mehrwertigen aliphatischen Alkoholen, die im Durchschnitt mehr als eine Epoxidgruppe pro Molekül enthalten.
b) Teilester von Polycarbonsäuren mit Polyglycolen, welche mindestens zwei freie Carbonsäuregruppen pro Molekül und in α,β-Stellung zu den freien Carboxylgruppen eine Doppelbindung enthalten.
c) ein Hydrophobierungsmittel,
wobei die Komponenten a) und b) im Molverhältnis 0,8:1 bis 1,2:1 vermischt werden.

Die Komponente a) ist vorzugsweise ein Epoxidierungsprodukt eines natürlichen ungesättigten Fettes oder Öles, das besonders bevorzugt im Durchschnitt mehr als 1,5 Epoxidgruppen pro Molekül enthält.

Die Polycarbonsäure-Komponenten der Teilester gemäß b) enthalten mindestens zwei Carbonsäurenfunktionen im Molekül. Beispiele für geeignete Säuren sind Maleinsäure, Fumarsäure, Phthalsäure, Terephthalsäure, Muconsäure (Hexadien-2,4-disäure) und Trimellithsäure.

Die Polyglycol-Komponenten der Teilester gemäß b) umfassen bevorzugt Polyglycole mit 2-6 Kohlenstoffatomen in der Kohlenstoffkette und 2-10 Glycoleinheiten pro Molekül. Besonders bevorzugt sind Polyethylenglycole, Polypropylenglycole, Polytetramethylenglycole und Polybutylenglycole. Erfindungsgemäß können auch Gemische der Polyglycole eingesetzt werden.

Als Hydrophobierungsmittel gemäß c) eignen sich z.B. Stearate von zwei-, drei- und vierwertigen Metallen wie Calciumstearat oder Aluminiumstearat, Polyethylenwachs oder Fischer-Tropsch-Hartparaffin, tierische oder pflanzliche Wachse, Mineralwachse, Polytetrafluorethylenpulver oder Siliconöl. Diese Substanzen werden im allgemeinen in einer Menge von etwa 6 bis 10 Gew.-%, bezogen auf die Gesamtmischung aus a), b) und c), zugesetzt, allerdings sind in manchen Fällen bereits geringere Anteile ausreichend (z.B. Silicon: 2 bis 8 Gew.-%, Tetrafluorethylenpulver: 4 bis 10 Gew.-%) oder noch größere Mengen angezeigt (z.B. siliconisierte Kieselsäure: 6 bis 12 Gew.-%).

Diesen Beschichtungsmassen können die üblichen Zusatzstoffe wie Füllstoffe und Pigmente beigegeben werden. Nach dem Mischen entstehen zähflüssige Pasten, welche mit den bekannten Auftragsvorrichtungen auf flächige Substrate aufgebracht werden können. Je nach Formulierung benötigt man 3 bis 5 Minuten bei Temperaturen um 180°C, um eine mechanisch ausreichend verfestigte und an ihrer Oberfläche klebfreie Beschichtung zu erzeugen.

### Beispiel 1

### Herstellung eines erfindungsgemäßen Teilesters der Maleinsäure

4,62 g (0,3 Mol) Dipropylenglykol und 59,38 g (0,6 Mol) Maleinsäureanhydrid werden in einem Kolben mit Rückflußkühler gemischt und unter Stickstoff während 1 bis 2 Stunden auf 100°C geheizt. Die Reaktion der beiden Stoffe ist exotherm und zeigt sich in einem beschleunigten Temperaturanstieg. Dadurch kann die Temperatur des Reaktionsgemisches kurzfristig über 100°C steigen. Ggfs. muß gekühlt werden. Die Temperatur soll 150°C nicht übersteigen. Nachdem die exotherme Reaktion abgeschlossen ist, wird bei 100°C gerührt, bis eine entnommene Probe eine Säurezahl zwischen 330 und 340 zeigt.

Die anderen Halbester werden analog zu dieser Vorschrift aus den entsprechenden Polyolen und Säureanhydriden hergestellt.

### Beispiel 2

### Herstellung einer Rückseiten-Beschichtung für einen Tufting-Fußboden

Durch Rühren wurde folgende Mischung bei Zimmertemperatur hergestellt (Angaben in Gewichtsteilen):

| | |
|---|---|
| 18,1 | epoxidiertes Leinöl |
| 16,0 | des im Beispiel 1 beschriebenen Halbesters aus Maleinsäureanhydrid und Dipropylenglykol |
| 2.0 | pyrogene Kieselsäure |
| 3.0 | Calciumstearat |
| 5.0 | Kaolin |

Es entstand eine hochviskose Masse, welche in einer Rührapparatur im Vakuum entgast wurde.

Mit dieser Masse wurde mittels einer Rakelstreichvorrichtung eine Beschichtung von 1 mm Dicke auf die Rückseite eines Tufting-Fußbodenmaterials aufgebracht. In einem Umluftofen wurde 5 min. auf 160°C erhitzt. Danach war die Beschichtung fest und zeigte eine klebfreie Oberfläche.

### Beispiel 3

### Aufbau eines linoleumähnlichen Materials

Auf ein handelsübliches, für Polyurethanbeschichtungen geeignetes Trennpapier wurde folgende Mischung 1 mm dick aufgestrichen.

| **Masse 1** (Angaben in Gewichtsteilen): | |
|---|---|
| 18,1 | epoxidiertes Leinöl |
| 16,0 | des im Beispiel 1 beschriebenen Halbesters aus Maleinsäureanhydrid und Dipropylenglykol |
| 2,0 | pyrogene Kieselsäure |
| 3,0 | Calciumstearat |
| 5,0 | Kaolin |

Diese Beschichtung wurde 4 min. in einem Laborspannrahmen mit Umluft von 150°C verfestigt. Nach dem Abkühlen wurde auf diese Schicht 1 mm folgender Mischung gestrichen:

| **Masse 2** (Angaben in Gewichtsteilen): | |
|---|---|
| 20,0 | epoxidiertes Leinöl |
| 31,5 | eines Halbesters von Maleinsäure mit Polypropylenglykol (Molekular gewicht 420), hergestellt nach der im Beispiel 1 beschriebenen Methode |
| 2,0 | pyrogene Kieselsäure |
| 4,0 | Calciumstearat |
| 10,0 | Kaolin |

In diese Masse wurde ein Glasfaservlies von 0,37 mm Dicke und 80 g/qm Flächengewicht kaschiert und mit einer Walze angedrückt. Die Masse drang dabei in das Vlies ein. Diese Beschichtung wurde auf einem Laborspannrahmen mit Umluft 5 min. bei einer Temperatur von 150°C verfestigt.

Nach dem Abkühlen wurde auf dieses Muster 0,5 mm Masse 1 aufgestrichen und dann - wie bereits beschrieben - 3 min. bei 180°C verfestigt.
Nach dem Abkühlen wird das gesamte Material vom Trennpapier abgezogen.

Die Oberflächen waren nach jedem Behandlungsschritt und nach dem Abziehen vom Papier vollkommen trocken und rollfähig. Trotzdem durchlief die Beschichtung nach der Herstellung eine Art Reifeprozeß, bei dem die mechanischen Eigenschaften, insbesondere die Elastizität, besser wurden und die Haftung der einzelnen Schichten aufeinander zunahm. Diese Reifung benötigt keinen Luftsauerstoff, kann also auch bei einer gerollten Ware ablaufen.

## Patentansprüche

1. Beschichtungsmasse, enthaltend eine Kombination von
a) Epoxidierungsprodukten von Estern ungesättigter Fettsäuren der Kettenlänge C₈ bis C₂₂ mit 2 bis 6 C-Atome enthaltenden mehrwertigen aliphatischen Alkoholen, die im Durchschnitt mehr als eine Epoxidgruppe pro Molekül enthalten und
b) Teilestern von Polycarbonsäuren mit Polyglycolen, welche mindestens zwei freie Carbonsäuregruppen pro Molekül und in α,β-Stellung zu den freien Carbonsäuregruppen eine Doppelbindung enthalten und
c) einem Hydrophobierungsmittel,
wobei die Komponenten nach a) und b) im Molverhältnis 0,8:1 bis 1,2:1 verwendet werden und der Zusatz von Hydrophobierungsmitteln 2 bis 14 Gewichtsprozent der Beschichtung beträgt.

2. Beschichtungsmasse nach Anspruch 1, ***dadurch gekennzeichnet,*** daß die Komponente a) ein Epoxidierungsprodukt eines natürlichen ungesättigten Fettes oder Öles ist.

3. Beschichtungsmasse nach Anspruch 1 oder 2, ***dadurch gekennzeichnet,*** daß die Komponente a) aus Epoxidierungsprodukten besteht, die im Durchschnitt mehr als 1,5 Epoxidgruppen pro Molekül enthalten.

4. Beschichtungsmasse nach Anspruch 1 bis 3, ***dadurch gekennzeichnet,*** daß die Komponente b) aus Teilestern von Polycarbonsäuren mit einem Polyglycol, ausgewählt unter
(i) Polyethylenglykolen der allgemeinen Formel
HO(̵CH₂-CH₂-O)̵ₙH mit n = 2 - 10
und
(ii) Polypropylenglykolen der allgemeinen Formel 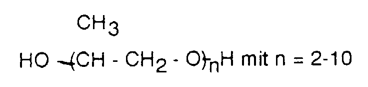 und
(iii) Polytetramethylenglykolethern der allgemeinen Formel
HO(̵CH₂-CH₂-CH₂-CH₂-O)̵ₙH mit n = 2 - 10
und
(iv) Polybutylenglykolen der allgemeinen Formel 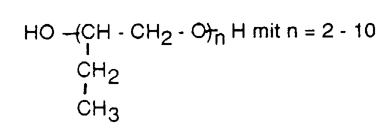 und Mischungen dieser Polyglycole,
besteht, welche noch mindestens zwei freie Carbonsäuregruppen enthalten, in deren α,β-Stellung eine Doppelbindung liegt.

5. Beschichtungsmasse nach einem der Ansprüch 1 bis 4, ***dadurch gekennzeichnet,*** daß als Polycarbonsäure für die Herstellung der Komponente b) Maleinsäure oder Phthalsäure verwendet wird.

6. Beschichtungsmasse nach einem der Ansprüche 1 bis 5, ***dadurch gekennzeichnet,*** daß das Hydrophobierungsmittel (Komponente c) ausgewählt ist unter Stearaten zwei-, drei- und vierwertiger Metalle, Polyethylenwachs, Fischer-Tropsch-Hartparaffin, tierischen Wachsen, pflanzlichen Wachsen und/oder Mineralwachsen und in einer Menge von 6 - 10 Gew.-%, bezogen auf das Gesamtgewicht der Komponenten a), b) und c), zugesetzt wird.

7. Beschichtungsmasse nach einem der Ansprüche 1 bis 5, ***dadurch gekennzeichnet,*** daß als Hydrophobierungsmittel Siliconöl in einer Menge von 2 - 8 Gew.-%, bezogen auf das Gesamtgewicht der Komponenten a), b) und c), zugesetzt wird.

8. Beschichtungsmasse nach einem der Ansprüche 1 bis 5, ***dadurch gekennzeichnet,*** daß als Hydrophobierungsmittel Polytetrafluorethylenpulver in einer Menge von 4 -10 Gew.-%, bezogen auf das Gesamtgewicht der Komponenten a), b) und c), zugesetzt wird.

9. Beschichtungsmasse nach einem der Ansprüche 1 bis 5, ***dadurch gekennzeichnet,*** daß als Hydrophobierungsmittel siliconisierte Kieselsäure in einer Menge von 6 bis 12 Gew.-%, bezogen auf das Gesamtgewicht der Komponenten a), b) und c), zugesetzt wird.

10. Beschichtungsmasse nach einem der Ansprüche 1 bis 9, ***dadurch gekennzeichnet,*** daß sie weiterhin übliche Zusatzstoffe, beispielsweise Füllstoffe und/oder Pigmente, enthält.

11. Verwendung der Beschichtungsmassen nach einem der Ansprüche 1 bis 10 zur Beschichtung von textilen Flächengebilden.

## Claims

1. Coating composition containing a combination of
a) epoxidisation products of esters of unsaturated fatty acids of chain length C₈ to C₂₂ with polyvalent aliphatic alcohols which contain 2 to 6 C atoms and which include on average more than one epoxide group per molecule and
b) partial esters of polycarbonic acids with polyglycols which include at least two free carbonic acid groups per molecule and a double bond with the free carbonic acid groups in the α,β position
c) a hydrophobic agent,
the components in accordance with a) and b) being used in a molar ratio of 0.8:1 to 1.2:1 and the addition of hydrophobic agents being 2 to 14 weight percent of the coating.

2. Coating composition as claimed in Claim 1, characterised in that the component a) is an epoxidisation product of a natural unsaturated fat or oil.

3. Coating composition as claimed in Claim 1 or 2, characterised in that the component a) comprises epoxidisation products which include on average more than 1.5 epoxide groups per molecule.

4. Coating composition as claimed in Claims 1 to 3, characterised in that the component b) comprises partial esters of polycarbonic acids with a polyglycol selected from
(i) polyethylene glycols with the general formula
HO(̵CH₂-CH₂-O)̵ₙH where n = 2-10
and
(ii) polypropylene glycols with the general formula 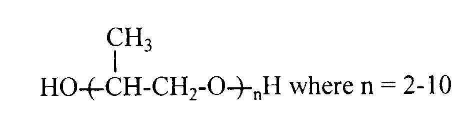 and
(iii) polytetramethylene glycol ethers with the general formula
HO(̵CH₂-CH₂-CH₂-CH₂-O)̵ₙH where n = 2-10
and
(iv) polybutylene glycols with the general formula 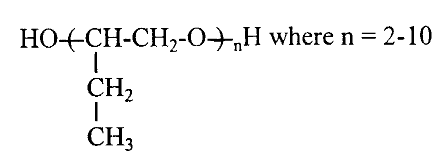 and mixtures of these polyglycols,
which contain at least two free carbonic acid groups in whose α,β position there is a double bond.

5. Coating composition as claimed in one of Claims 1 to 4, characterised in that maleic acid or phthalic acid is used as the polycarbonic acid for the manufacture of component b).

6. Coating composition as claimed in one of Claims 1 to 5, characterised in that the hydrophobic agent (component c) is selected from stearates of divalent, trivalent and quadrivalent metals, polyethylene wax, Fischer-Tropsch hard paraffin, animal waxes, vegetable waxes and/or mineral waxes and is added in an amount of 6-10 wt.%, with respect to the total weight of the components a), b) and c).

7. Coating composition as claimed in one of Claims 1 to 5, characterised in that silicone oil in an amount of 2-8 wt.%, with respect to the total weight of the components a), b) and c), is added as the hydrophobic agent.

8. Coating composition as claimed in one of Claims 1 to 5, characterised in that polytetrafluoroethylene powder is added in an amount of 4-10 wt.%, with respect to the total weight of the components a), b) and c), as the hydrophobic agent.

9. Coating composition as claimed in one of Claims 1 to 5, characterised in that siliconised silica in an amount of 6 to 12 wt.%, with respect to the total weight of the components a), b) and c), is added as the hydrophobic agent.

10. Coating composition as claimed in one of Claims 1 to 9, characterised in that it also includes conventional additives, for instance fillers and/or pigments.

11. Use of coating compositions as claimed in one of Claims 1 to 10 for coating flat shaped textile structures.

## Revendications

1. Enduit contenant une combinaison de
a) produits d'époxydation d'esters d'acides gras non saturés de longueur de chaîne C₈ à C₂₂ avec des alcools aliphatiques contenant de 2 à 6 atomes C, qui contiennent en moyenne plus d'un groupe époxy par molécule et
b) d'esters partiels d'acides polycarboniques avec des polygycols, qui contiennent au moins deux groupes d'acides carboniques libres par molécule et une double liaison en position α, β par rapport aux groupes d'acides carboniques et
c) d'un imperméabilisant,
les composants selon a) et b) étant utilisés dans un rapport molaire de 0,8:1 à 1,2:1 et l'ajout d'imperméabilisant représentant de 2 à 14 pour cent en poids du revêtement.

2. Enduit selon la revendication 1, caractérisé en ce que le composant a) est un produit d'époxydation d'une graisse ou d'une huile naturelle, non saturée.

3. Enduit selon la revendication 1 ou 2, caractérisé en ce que le composant a) est constitué de produits d'époxydation, qui contiennent en moyenne plus de 1,5 groupes époxy par molécule.

4. Enduit selon la revendication 1 à 3, caractérisé en ce que le composant b) est constitué d'esters partiels d'acides polycarboniques avec un polyglycol, choisi parmi
(i) des polyéthylèneglycols de formule générale 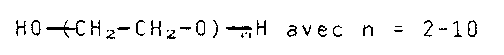 et
(ii) des polypropylèneglycols de formule générale 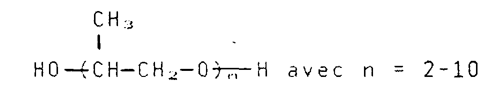 avec n = 2-10
et
(iii) des polytétraméthylèneglycoléthers de formule générale 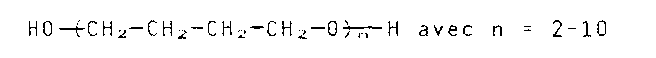 et
(iv) des polybutylèneglycols de formule générale 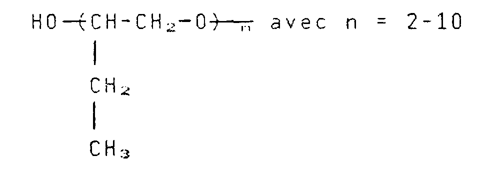 avec n = 2-10
et des mélanges de ces polyglycols,
qui contiennent encore au moins deux groupes d'acides carboniques libres, dans la position α, β desquels se trouve une double liaison.

5. Enduit selon l'une des revendications 1 à 4, caractérisé en ce qu'on utilise comme acide polycarbonique de l'acide maléique ou de l'acide phtalique pour la préparation du composant b).

6. Enduit selon l'une des revendications 1 à 5, caractérisé en ce que l'imperméabilisant (composant c) est choisi parmi des stéarates de métaux bivalents, trivalents et tétravalents, de la cire de polyéthylène, de la paraffine dure de Fischer et Tropsch, des cires animales, des cires végétales et/ou des cires minérales et est ajouté dans une quantité de 6 à 10 % en poids, par rapport au poids total des composants a), b) et c).

7. Enduit selon l'une des revendications 1 à 5, caractérisé en ce qu'on ajoute comme imperméabilisant, de l'huile de silicone dans une quantité de 2 à 8 % en poids, par rapport au poids total des composants a), b) et c).

8. Enduit selon l'une des revendications 1 à 5, caractérisé en ce qu'on ajoute comme imperméabilisant, de la poudre de polytétrafluoréthylène dans une quantité de 4 à 10 % en poids, par rapport au poids total des composants a), b) et c).

9. Enduit selon l'une des revendications 1 à 5, caractérisé en ce qu'on ajoute comme imperméabilisant de l'acide silicique siliconisé dans une quantité de 6 à 12 % en poids, par rapport au poids total des composants a), b) et c).

10. Enduit selon l'une des revendications 1 à 9, caractérisé en ce qu'il contient en outre des additifs usuels, par exemple des charges et/ou des pigments.

11. Utilisation des enduits selon l'une des revendications 1 à 10 pour enduire des produits plats textiles.
